# EUROPEAN PATENT APPLICATION

(11) **EP 4 074 477 A1**
(43) Date of publication of application: **19.10.2022**
(21) Application number: 20899736.1
(22) Date of filing: 09.12.2020
(51) Int. Cl.: B25J 15/08

(54) **ROBOT HAND COMPRISING VIBRATION SENSOR, AND ROBOT SYSTEM COMPRISING SAID ROBOT HAND**

(30) Priority: 10.12.2019 JP 2019222998
(71) Applicant: Nagoya Institute Of Technology, Nagoya-shi, Aichi 466-8555 (JP); Meltin MMI Co., Ltd., Tokyo 1040033 (JP)
(72) Inventor: TANAKA, Yoshihiro, Nagoya-shi, Aichi 466-8555 (JP); SEKI, Tatsuya, Tokyo 104-0033 (JP)
(74) Representative: Uexküll & Stolberg
(86) International application number: PCT/JP2020/045762
(87) International publication number: WO 2021/117750

(57) **Abstract**

The purpose of the present invention is to provide a robot hand in which it is possible to sense that a finger part of the robot hand has come into contact with an object, and at the same time to reduce the contact between a vibration sensor and the object. The present invention provides a robot hand comprising: a base part; at least one finger part joined to the base part, the at least one finger part being provided with at least a base joint that is joined to the base part, and a distal-end terminal joint; and a vibration sensor capable of detecting vibration transmitted from the at least one finger part. The robot hand has a back side and a palm side, the vibration sensor being positioned on the back side.

## Description

### [Technical Field]

The present invention relates to a robotic hand comprising a vibration sensor and a robotic system comprising the same.

### [Background Art]

Conventional robotic hands utilize a sensor for detecting a force acting on the fingertips in order to sense that a finger of the robotic hands has contacted an object (e.g., Patent Literature 1).

### [Citation List]

### [Patent Literature]

[PTL 1] Japanese Laid-Open Publication No. 2005-329512

### [Summary of Invention]

### [Technical Problem]

It is necessary to dispose a force sensor directly on a finger pad on which a force acts in order to detect the force acting on the fingertip. However, since such a force sensor is fragile, conventional robotic hands had problems such as the force sensor disposed on the finger pad being damaged simply from colliding with an object or contacting the object several times.

The present invention was conceived under such a circumstance. The objective of the invention is to provide a robotic hand, which is capable of sensing that a finger portion of the robotic hand has contacted an object, as well as reducing contact between a vibration sensor and the object.

### [Solution to Problem]

The present invention provides, for example, the following items.

### (Item 1)

A robotic hand comprising:
a base portion;
at least one finger portion coupled to the base portion, comprising at least a proximal phalanx coupled to the base portion and a distal phalanx at a tip; and
a vibration sensor capable of detecting a vibration conducted from the at least one finger portion;
wherein the robotic hand has a back hand side and a palm side, and
wherein the vibration sensor is disposed on the back hand side.

### (Item 2)

The robotic hand of item 1, wherein the vibration sensor is disposed along a line connecting the proximal phalanx and the distal phalanx.

### (Item 3)

The robotic hand of item 2, wherein the vibration sensor is disposed at the proximal phalanx.

### (Item 4)

The robotic hand of item 2, wherein the vibration sensor is disposed at the base portion.

### (Item 5)

The robotic hand of item 4, wherein the vibration sensor is disposed to extend from a joint to which the proximal phalanx is coupled.

### (Item 6)

The robotic hand of any one of items 1 to 5, wherein the vibration sensor is disposed on an outer surface.

### (Item 7)

The robotic hand of any one of items 1 to 6, wherein the vibration sensor has a length that is approximately equal to a length of the proximal phalanx.

### (Item 8)

The robotic hand of any one of items 1 to 7, wherein the vibration sensor has a rod-like shape.

### (Item 9)

The robotic hand of any one of items 1 to 8, wherein the vibration sensor comprises a core conductor, a piezoelectric film covering the surrounding of the core conductor, and an outer conductor covering the surrounding of the piezoelectric film.

### (Item 10)

The robotic hand of any one of items 1 to 9, wherein the vibration sensor is a macromolecular piezoelectric vibration sensor.

### (Item 11)

The robotic hand of any one of items 1 to 10, wherein the at least one finger portion comprises a thumb portion and one or more finger portions extending in a direction that is different from the thumb portion.

### (Item 12)

A robotic system comprising:
the robotic hand of any one of items 1 to 10; and
contact position detection means for visually detecting a position of contact between the robotic hand and the object.

### (Item 13)

The robotic system of item 12, further comprising contact force estimation means for estimating a contact force applied on an object based on the position of contact detected by the contact position detection means and a signal sensed by the vibration sensor.

### (Item 14)

The robotic system of item 12 or 13, wherein the at least one finger portion comprises a thumb portion and one or more finger portions extending in a direction that is different from the thumb portion.

### [Advantageous Effects of Invention]

The present invention can provide a robotic hand comprising a vibration sensor, which is capable of sensing that a finger portion of the robotic hand has contacted an object and has reduced contact with the object. The possibility of a vibration sensor being damaged due to contact with an object can be suppressed in such a robotic hand.

### [Brief Description of Drawings]

[Figure 1A] Figure **1A** is a diagram showing the outer appearance of an example of the robotic hand of the invention (robotic hand **100).**
[Figure 1B] Figure **1B** is a diagram showing the outer appearance of another example of the robotic hand of the invention (robotic hand **100').**
[Figure 2] Figure **2** is a diagram showing an example of the configuration of robotic system **1000** comprising the robotic hand **100** of the invention.
[Figure 3] Figure **3** is a flow chart showing an example of processing by controller **300.**

### [Description of Embodiments]

The present invention is described hereinafter. The terms used herein should be understood as being used in the meaning that is commonly used in the art, unless specifically noted otherwise. Therefore, unless defined otherwise, all terminologies and scientific technical terms that are used herein have the same meaning as the general understanding of those skilled in the art to which the present invention pertains. In case of a contradiction, the present specification (including the definitions) takes precedence.

As used herein, "about" refers to a numerical range of ± 10% from the numerical value that is described subsequent to "about".

The embodiments of the invention are described hereinafter while referring to the diagrams.

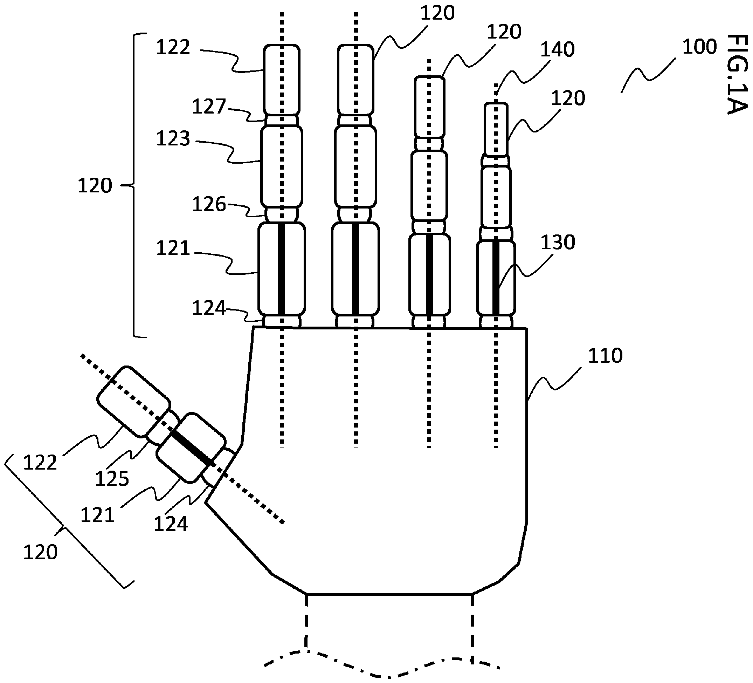

Figure **1A** is a diagram showing the outer appearance of an example of the robotic hand of the invention (robotic hand **100).**

The robotic hand **100** has a back hand side and a palm side. As used herein, "palm side" refers to the side having a surface on which a normal vector has a component in a direction toward which a palm of the robotic hand faces, and "back hand side" refers to the side having a surface on which a normal vector has a component in a direction toward which a back hand of the robotic hand faces. Figure **1A** shows the back hand side of the robotic hand **100** for a right hand.

The robotic hand **100** comprises a base portion **110,** at least one finger portion **120** coupled to the base portion **110,** and a vibration sensor **130** capable of detecting a vibration conducted from the at least one finger portion **120.**

The base portion **110** is a portion that serves as the base for the at least one finger portion **120.** For example, the base portion **110** can be coupled to a tip of a robotic arm indicated by a dotted line.

For example, a mechanism for driving the at least one finger portion **120** can be stored within the base portion **110.** The mechanism for driving the finger portion 120 can have any configuration, as long as the finger portion can be bent and stretched. For example, the mechanism can be a wire, a link mechanism, or a rack and pinion. In one embodiment, the mechanism is a wire, but the present invention is not limited thereto. A driving unit for driving a wire, etc. can be any means, as long as the wire, etc. can be driven. For example, the driving unit can be a motor, a pneumatic or hydraulic cylinder, etc. A driving unit can be provided in a robotic hand, or provided separately from a robotic hand to a robotic arm or a robot main body.

The at least one finger portion **120** comprises at least two phalanges, i.e., a proximal phalanx **121** coupled to the base portion **110** and a distal phalanx **122** at the tip.

The finger portion **120** can pivot with respect to the base portion **110** about a joint **124** by coupling the proximal phalanx **121** with the base portion **110** via the joint **124.** The joint **124** can correspond to an MP joint in a human hand.

For example, the distal phalanx **122** can be coupled to the proximal phalanx **121** via a joint **125.** This enables the distal phalanx **122** to pivot with respect to the proximal phalanx **121** about the joint **125.** In this regard, the joint **125** can correspond to an IP joint in a human hand.

For example, the at least one finger portion **120** can further comprise a middle phalanx **123** as shown in Figure **1A****.** The middle phalanx **123** can be coupled to the proximal phalanx **121** via a joint **126,** and to the distal phalanx **122** via a joint **127.** This enables the middle phalanx **123** to pivot with respect to the proximal phalanx **121** about the joint **126,** and the distal phalanx **122** to pivot with respect to the middle phalanx **123** about the joint **127.** In this regard, the joint **126** can correspond to a PIP joint in a human hand, and the joint **127** can correspond to a DIP joint in a human hand.

For example, the at least one finger portion **120** can further comprise an additional phalanx. Specifically, the at least one finger portion **120** can comprise four or more phalanges. Each phalanx can pivot with respect to an adjacent phalanx by coupling adjacent phalanges via a joint.

Each phalanx of the at least one finger portion **120** can pivot with respect to an adjacent phalanx by any means that is known in the art. For example, each phalanx can be pivoted with respect to an adjacent phalanx by installing a wire to extend from each phalanx and pulling the wire. This enables the at least one finger portion **120** to bend. In one embodiment, each phalanx can be pivoted about a joint by installing a wire to extend from each phalanx to the robot main body and driving a wire driving motor provided in the robot main body. This enables the at least one finger portion **120** to bend. However, the present invention is not limited thereto. For example, a motor can be installed in each joint, and each motor can be driven, or a motor that drives a wire can be provided at a base portion.

In the example shown in Figure **1A****,** the robotic hand **100** comprises five finger portions **120,** but the number of finger portions **120** is not limited to the number shown. The robotic hand **100** can comprise any number of finger portions **120** that is one or greater.

For example, the robotic hand **100** can comprise two finger portions **120.** In such a case, the two finger portions are preferably coupled to the base portion **110** such that they extend in different directions in the same manner as the positional relationship of a human thumb and index finger because the robotic hand **100** would be able to hold an object by using the two finger portions **120.**

For example, the robotic hand **100** can comprise three finger portions **120.** In such a case, one finger portion (thumb) and two finger portions (index finger and middle finger) are preferably coupled to the base portion **110** such that they extend in different directions in the same manner as the positional relationship of a human thumb, index finger, and middle finger because the robotic hand **100** would be able to support an object from three points to hold the object firmly by using three finger portions **120.**

For example, the robotic hand **100** can comprise five finger portions **120.** In such a case, four finger portions and one finger portion are preferably coupled to the base portion **110** such that they extend in different directions in the same manner as the positional relationship of five fingers of a human because the robotic hand **100** would be able to mimic the movement of a human hand to hold an object.

The vibration sensor **130** is configured so that a vibration conducted from the at least one finger portion **120** can be detected. Since a vibration is generated upon contact of the at least one finger portion 120 of the robotic hand **100** with an object, contact of the at least one finger portion **120** with an object can be sensed by detecting a vibration. The vibration sensor **130** can sense not only a contact of the tip of the proximal phalanx of the at least one finger portion **120** with an object, but also a contact of any part of the at least one finger portion **120** with an object by detecting a vibration.

In one Example, each of the at least one finger portion **120** is provided with a respective vibration sensors **130.** If, for example, the robotic hand **100** comprises two finger portions **120,** the robotic hand **100** can comprise two vibration sensors **130.** If, for example, the robotic hand **100** comprises three finger portions **120,** the robotic hand **100** can comprise three vibration sensors **130.** If, for example, the robotic hand **100** comprises five finger portions **120,** the robotic hand **100** can comprise five vibration sensors **130.** This enables which of the plurality of finger portions that has contacted an object to be sensed.

In a preferred embodiment, the robotic hand **100** comprises two finger portions **120** in a positional relationship of a human thumb and index finger, and the two finger portions **120** each comprise a respective vibration sensor **130.** In such a case, the finger portion corresponding to an index finger can be a tabular finger portion produced by coupling a plurality of finger portions. In another preferred embodiment, the robotic hand **100** comprises three finger portions **120** in a positional relationship of a human thumb, index finger, and middle finger, and the three finger portions **120** each comprise a respective vibration sensor **130.** For example, when holding or manipulating an object using two or three finger portions **120,** each finger portion **120** may contact the object. For example, the finger portion **120** can unintentionally contact an object in a blind zone of the robotic hand **100.** Safety and ease of manipulation of an object of the robotic hand **100,** as well as embodiment, can improve by sensing such a contact. In this regard, embodiment refers to a sense of integration between a human and a robot. Specifically, this is represented by a sense of agency and sense of ownership.

The vibration sensor in the invention can be in any form, as long as it is a sensor that can detect vibrations. A vibration sensor can be, for example, an acceleration sensor or a velocity sensor. An acceleration sensor or velocity sensor can detect a vibration by performing differentiation on a detected signal, etc. A vibration sensor is preferably a vibration sensor that specializes in the detection of a minute curvature of a finger in terms of directly detecting a vibration occurring at the finger due to a contact. Relative to an acceleration sensor or velocity sensor, a vibration sensor that specializes in the detection of a curvature of a finger does not react when the entire finger moves uniformly, is capable of accurately detecting a vibration generated at a finger due to a contact, and has a simple structure so that it is capable of achieving high reliability against defects, etc.

The vibration sensor **130** comprises, for example, a piezoelectric element. Since a piezoelectric element generates a charge through a piezoelectric effect due to deformation of the piezoelectric element, any form thereof can be used, as long as a vibration can be detected by detecting a charge generated from a piezoelectric element through a deformation due to a vibration. For example, a piezoelectric element can be ceramic having a piezoelectric property or manufactured from a macromolecular polymer. Examples of ceramic having a piezoelectric property include barium titanate, lead zirconate titanate (PZT), etc. Examples of macromolecular polymers include polyvinylidene fluoride (PVDF). Preferably, a piezoelectric element is manufactured from a macromolecular polymer. A macromolecular polymer is advantageously used for its flexibility, high reactivity to bending, and resistance to damage.

The macromolecular piezoelectric vibration sensor 130 having a piezoelectric element manufactured from a macromolecular polymer is comprised of at least a core conductor, a piezoelectric film, and an outer conductor. For example, a core conductor can have an approximately cylindrical shape with a diameter of about 0.50 mm to about 1.50 mm, such as an approximately cylindrical shape with a diameter of about 1.02 mm. A core conductor can be composed of a material such as copper, silver, gold, or silver plated copper.

A piezoelectric film functions as a piezoelectric element and is coated on to cover the surrounding of a core conductor. For example, a piezoelectric film can be spirally wrapped around a core conductor. A piezoelectric film can have a thickness of, for example, about 20 µm to about 130 µm, such as a thickness of about 28 µm, about 52 µm, or about 110 µm.

An outer conductor is coated on to cover the surrounding of a piezoelectric film. By providing an outer conductor, a core conductor can function as a signal line, and the outer conductor can function as a ground wire. For example, an outer conductor can have an approximately cylindrical shape with a diameter of about 0.50 mm to about 1.50 mm. An outer conductor can be composed of a material such as copper, silver, or gold. For example, an outer conductor can be braided copper wires.

For example, the macromolecular piezoelectric vibration sensor **130** can be provided with an outer jacket for covering an outer conductor. An outer jacket functions as an insulator. For example, an outer jacket can be manufactured from an insulating polymeric material such as high density polyethylene.

The vibration sensor **130** can be provided at any position on the back hand side. The risk of the vibration sensor **130** contacting an object in an operation to grab the object, etc. by using the at least one finger portion **120** can be reduced by providing the vibration sensor on the back hand side. In one embodiment, the vibration sensor is disposed at the proximal phalanx **121** on the back hand side of the robotic hand **100** as shown in Figure **1A****.** This can ensure detection of a vibration from a contact of the at least one finger portion **120** with an object while eliminating direct contact of the vibration sensor **130** with the object when the object is grabbed by the fingertips of the at least one finger portion **120.** Therefore, damages to the vibration sensor **130** due to a contact with an object can be prevented.

As shown in Figure **1A****,** each vibration sensor **130** is preferably disposed along a line **140** connecting the proximal phalanx **121** and the distal phalanx **122** of each finger portion **120** on the back hand side of the robotic hand **100.** This can ensure detection of a vibration from a contact of the at least one finger portion **120** with an object while further reducing direct contact of the vibration sensor **130** with the object when the at least one finger portion **120** contacts the object. Therefore, damages to the vibration sensor **130** due to a contact with an object can be further reduced.

For example, the vibration sensor **130** is preferably disposed on the outer surface of the proximal phalanx **121** on the back hand side of the robotic hand **100.** This enables, for example, more precise detection of a vibration compared to a configuration where the vibration sensor **130** is disposed inside the proximal phalanx **121.** The outer surface of a proximal phalanx on the back hand side of the robotic hand **100** is a portion that deforms the most by a contact of the at least one finger portion **120** with an object. The vibration sensor **130** disposed on the outer surface on the back hand side of a proximal phalanx can precisely detect a deformation of the outer surface on the back hand side of the proximal phalanx even if the vibration due to a contact is minute, and therefore a vibration can be detected precisely. Further, a contact with an object can be better prevented and damage to a vibration sensor can be better inhibited by providing the vibration sensor on the back hand side relative to providing the vibration sensor on the palm side of the hand.

The shape of the vibration sensor **130** can be any shape. For example, the shape can be sheet-like, tabular, or rod-like. For example, a rod-like shape can be a shape with a length in the longitudinal direction that is two-fold, three-fold, four-fold, five-fold, or greater of the length in the transverse direction. The vibration sensor **130** preferably has a rod-like shape. Since the longitudinal side of a rod-like vibration sensor can be disposed along the longitudinal direction of a rod-like finger portion, installability is improved. Further, contact with an object and risk of damage can be reduced relative to wrapping a sheet-like or tabular vibration sensor along the transverse direction of a finger portion to cover the surrounding of a finger portion. A rod-like shape also results in low anisotropy in deformation of a piezoelectric element to enable more precise measurement. Furthermore, a rod-like vibration sensor is advantageous in terms of allowing implementation using a small space. For example, the vibration sensor **130** can be readily installed on the robotic hand **100** by fitting the vibration sensor **130** within a slit provided on the proximal phalanx **121** of the at least one finger portion **120.** For example, the vibration sensor **130** can also be installed on the robotic hand **100** by securing the vibration sensor **130** onto the proximal phalanx **121** of the at least one finger portion **120** by wrapping the vibration sensor with a band, tape, etc. The cross-sectional shape of the rod-like shape can be any shape. For example, the cross-sectional shape can be an approximately circular shape, an approximately rectangular shape, or an approximately polygonal shape. Preferably, the cross-section has an approximately circular shape and more preferably a circular shape. A circular cross-sectional shape enables low anisotropy in detection sensitivity and more precise measurement. If the cross-section of the vibration sensor **130** is a circular shape, the diameter of the cross-section can be, for example, about 2.50 mm to about 3.50 mm, such as 2.67 mm or about 2.69 mm.

The length of a vibration sensor in the longitudinal direction can be at least about 50% or more of the length of the proximal phalanx **121,** preferably about 70% or more of the length of the proximal phalanx **121,** and more preferably approximately equal to as the length of the proximal phalanx. In this regard, "length approximately equal to the length of a proximal phalanx" includes lengths within a range of ± 10% of the length of a proximal phalanx. The vibration sensor **130** can bend more readily with a longer length in the longitudinal direction of the vibration sensor **130,** even by a minute vibration due to a contact. As a result, a vibration can be more precisely detected.

The vibration sensor **130** can output a signal representing a sensed vibration in any form. For example, the vibration sensor **130** can be configured to output a voltage signal representing a sensed vibration, or a current signal representing a sensed vibration.

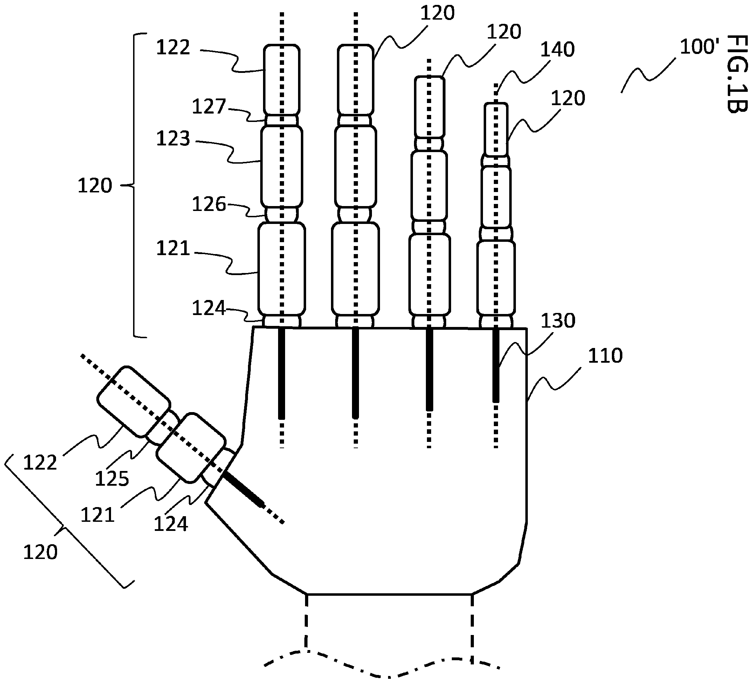

Figure **1B** is a diagram showing the outer appearance of another example of the robotic hand of the invention (robotic hand **100').** In Figure **1B****,** the back hand side of the robotic hand **100'** for a right hand is shown in the same manner as Figure **1A****.**

The robotic hand **100'** has the same configuration as the robotic hand **100,** but is different from the robotic hand **100** in that the vibration sensor **130** is disposed at the base portion **110** instead of the proximal phalanx **121** of the at least one finger portion **120.** In Figure **1B****,** the same reference number is assigned to constituent elements that are the same as the constituent elements shown in Figure **1A****,** and the explanation thereof is omitted herein.

As shown in Figure **1B****,** the vibration sensor **130** is disposed at the base portion **110** on the back hand side of the robotic hand **100'.** This enables detection of a vibration from a contact of the at least one finger portion **120** with an object while eliminating the possibility of a direct contact of the vibration sensor **130** with the object when the at least one finger portion **120** contacts the object. Therefore, the risk of damage to the vibration sensor **130** due to a contact with an object can be eliminated.

As shown in Figure **1B****,** each vibration sensor **130** is preferably disposed along the line **140** connecting the proximal phalanx **121** and the distal phalanx **122** of each finger portion **120** on the back hand side of the robotic hand **100'.** In view of the above, each vibration sensor **130** would be the closest to the respective finger portion **120,** thus ensuring each vibration sensor **130** to detect a vibration from a contact of the respective finger portion **120** with an object and reducing the possibility of false detection of a vibration from a contact of another finger portion **120** with an object.

For example, the vibration sensor **130** is preferably disposed on the back hand side of a base portion in a manner that extends from the joint **124** to which the proximal phalanx **121** is connected. With this configuration, the vibration sensor **130** is brought close to the at least one finger portion **120** as much as possible to enable more precise detection of a vibration from a contact of the at least one finger portion **120** with an object.

In the examples described by referring to Figures **1A** and **1B****,** the vibration sensor **130** was described to be disposed at the proximal phalanx **121** or the base portion **110** on the back hand side of the robotic hand **100,** but the disposition of the vibration sensor **130** is not limited thereto. The vibration sensor **130** can be disposed at any position, as long as the position is on the back hand side of the robotic hand **100.** This is because if the vibration sensor is on the back hand side of the robotic hand **100,** a vibration from a contact of the at least one finger portion **120** with an object can be detected, while the possibility of a direct contact of the vibration sensor **130** with the object when the at least one finger portion **120** contacts the object can be reduced.

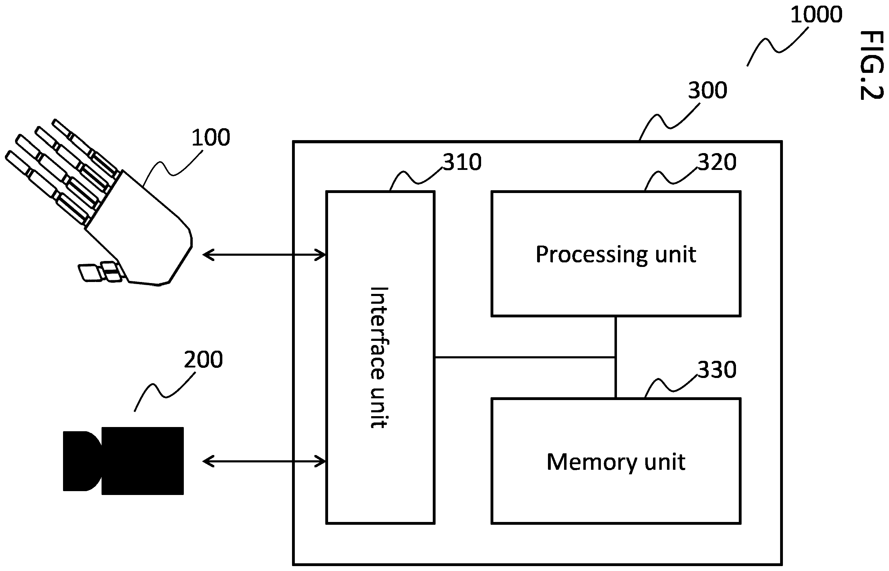

Figure **2** is a diagram showing an example of the configuration of robotic system **1000** comprising the robotic hand **100** of the invention.

The robotic system **1000** comprises at least the robotic hand **100,** image capturing means **200,** and a controller **300.** The robotic system **1000** can comprise the robotic hand **100'** instead of the robotic hand **100.**

The robotic hand **100** (or robotic hand **100')** has the same configuration as the configuration described above while referring to Figure **1A** (or Figure **1B****).** Thus, explanation thereof is omitted in this section.

The image capturing means **200** can comprise, for example, a camera that can capture an image (still image and/or video) of a subject. For example, the image capturing means **200** can be configured to capture an image, from which the three-dimensional position of a subject can be computed. For example, the image capturing means **200** can comprise a camera for capturing a three-dimensional image (depth camera), and the controller **300** described below can compute the three-dimensional position of a subject from the captured three-dimensional image. For example, the image capturing means **200** can comprise a plurality of cameras, and the controller **300** described below can compute the three-dimensional position of a subject from a plurality of images captured from a plurality of directions by a plurality of cameras.

The controller **300** comprises an interface unit **310,** a processing unit **320,** and a memory unit **330.**

The interface unit **310** exchanges information with elements external to the controller **300.** The processing unit **320** of the controller **300** can receive information from elements external to the controller **300** via the interface unit **310,** and transmit information to elements external to the controller **300.** The interface unit **310** can exchange information in any form.

For example, the interface unit **310** can exchange information with the robotic hand **100.** For example, the processing unit **320** of the controller **300** can receive a signal from the vibration sensor **130** of the robotic hand **100** via the interface unit **310.** For example, the processing unit **320** of the controller **300** can transmit a control signal to a driving unit of the robotic hand **100** via the interface unit **310.**

For example, the interface unit **310** can exchange information with the image capturing means **200.** For example, the processing unit **320** of the controller **300** can receive an image from the image capturing means **200** via the interface unit **310.** For example, the processing unit **320** of the controller **300** can transmit a control signal to the image capturing means **200** via the interface unit **310.**

The processing unit **320** executes processing of the controller **300** and controls the entire operation of the controller **300.** The processing unit **320** reads out a program stored in the memory unit **330** and executes the program. This enables the controller **300** to function as a system that executes a desired step. The processing unit **320** can be implemented by a single processor or a plurality of processors.

For example, the processing unit **320** can be configured to identify the position of contact between the robotic hand **100** and an object based on an image received from the image capturing means **200** via the interface unit **310.** Specifically, the processing unit **320** can be configured as contact position detection means, in combination with the image capturing means **200,** for visually detecting the position of contact between the robotic hand **100** and an object.

The processing unit **320** can identify the position of contact between the robotic hand **100** and an object by using an image processing technology that is known in the art. For example, the processing unit **320** can visually identify the position of contact between the robotic hand **100** and an object from a plurality of images captured by the image capturing means **200** from a plurality of directions. For example, the processing unit **320** can compute the three-dimensional position of the robotic hand **100** and the three-dimensional position of an object from a three-dimensional image captured by the image capturing means **200** and compare the three-dimensional position of the robotic hand **100** with the three-dimensional position of the object to identify the position of contact between the robotic hand **100** and the object. For example, the processing unit **320** can compute the three-dimensional position of the robotic hand **100** and the three-dimensional position of an object from a plurality of images captured by the image capturing means **200** from a plurality of directions and compare the three-dimensional position of the robotic hand **100** with the three-dimensional position of the object to identify the position of contact between the robotic hand **100** and the object.

For example, the processing unit **320** can be configured to estimate a contact force applied on an object based on a signal received from the vibration sensor **130** of the robotic hand **100** via the interface unit **310** and the position of contact detected by the contact position detection means described above. Specifically, the processing unit **320** can be configured as contact force estimation means.

For example, contact force estimation means can estimate the contact force from the relationship between the position of contact between the robotic hand **100** and an object and the intensity of a signal from the vibration sensor **130.** For example, by conducting an experiment for contacting the robotic hand **100** with an object at a certain position at a certain contact force and developing a model of the relationship of the intensity of a signal sensed by the vibration sensor **130,** position of contact, and contact force at the time, the contact force estimation means can estimate the contact force by using the model.

For example, a model can be developed for the relationship of the intensity of a signal sensed from the vibration sensor **130,** position of contact, and contact force by using a regression model. For example, a model can be developed by using a regression model that uses the position of contact and the intensity of a signal from the vibration sensor **130** as an explanatory variable and the contact force as a response variable. For example, a regression model can be a linear regression model or a nonlinear regression model.

For example, a model can be developed for the relationship of the intensity of a signal from the vibration sensor **130,** position of contact, and contact force by using a neural network. For example, a model can be developed by computing the coefficient of each node of a neural network by using the position of contact and the intensity of a signal from the vibration sensor **130** as input supervisor data and contact force as output supervisor data. A neural network can have any number of layers.

Since contact force estimation means can estimate the contact force, the robotic hand **100** would not need to comprise a force sensor for sensing the contact force. Since such a force sensor is fragile and readily damaged, lack of the need to comprise a force sensor enables reduced labor that is required for maintenance of the robotic hand **100** and adjustment of sensitivity.

Furthermore, the contact force estimated by contact force estimation means can be utilized to control the robotic hand **100.** For example, the robotic hand **100** can be controlled to hold an object with an appropriate force based on the contact force estimated by the contact force estimation means. This is especially effective when the robotic hand **100** comprises three or more finger portions. Even an object that is challenging to hold can be held with an appropriate force from three or more points by controlling the force exerted on each of the three or more finger portions **120** based on the contact force estimated by contact force estimation means.

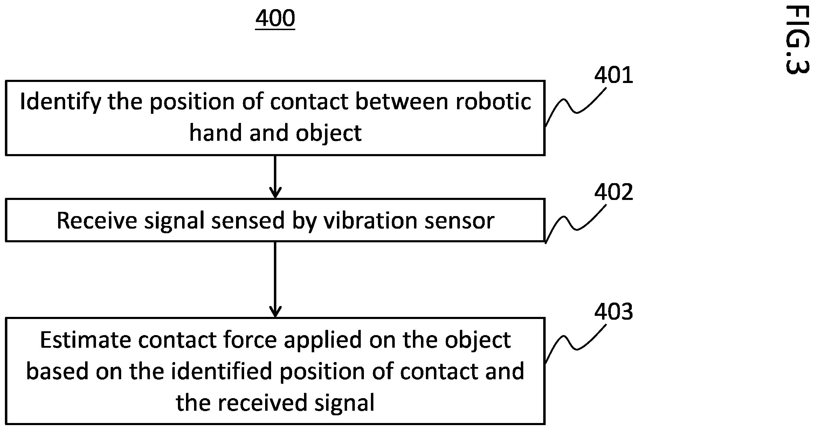

The memory unit **330** stores a program that is required for the execution of processing of the controller **300,** data that is required for execution of the program, etc. The memory unit **330** can store a program for causing the processing unit **320** to execute processing for estimating the contact force applied on an object by the robotic hand **100** (e.g., program for materializing processing shown in Figure **3** described below). In this regard, the program can be stored in the memory unit **330** in any manner. For example, a program can be preinstalled in the memory unit **330.** Alternatively, a program can be downloaded through a network that can be connected via the interface unit **310** to be installed in the memory unit **330.** In such a case, the network can be any type of network. The memory unit **330** can be implemented by any storage means.

In the example shown in Figure **2****,** each constituent element of the controller **300** is provided within the controller **300,** but the present invention is not limited thereto. Any of the constituent elements of the controller **300** can also be provided outside of the controller **300.** For example, if the processing unit **320** and the memory unit **330** are each configured as separate hardware parts, each hardware part can be connected via any network. In such a case, the network can be any type of network. For example, each hardware part can be connected via LAN, wireless connection, or wired connection. The controller **300** is not limited to a specific hardware configuration. Configuration of the processing unit **320** by an analog circuit instead of a digital circuit is also within the scope of the present invention. The configuration of the controller **300** is not limited to those described above, as long as the function thereof can be materialized.

Figure **3** is a flow chart showing an example of processing by the controller **300.** The processing unit **320** of the controller **300** performs processing **400** for estimating the contact force applied on an object by the robotic hand **100.**

In step **S401,** the processing unit **320** identifies the position of contact between the robotic hand **100** and an object. For example, the processing unit **320** can identify the position of contact between the robotic hand **100** and an object based on an image received from the image capturing means **200** via the interface unit **310.**

The processing unit **320** can identify the position of contact between the robotic hand **100** and an object by using an image processing technology that is known in the art. For example, the processing unit **320** can visually identify the position of contact between the robotic hand **100** and an object from a plurality of images captured by the image capturing means **200** from a plurality of directions. For example, the processing unit **320** can compute the three-dimensional position of the robotic hand **100** and the three-dimensional position of an object from a three-dimensional image captured by the image capturing means **200** and compare the three-dimensional position of the robotic hand **100** with the three-dimensional position of the object to identify the position of contact between the robotic hand **100** and the object. For example, the processing unit **320** can compute the three-dimensional position of the robotic hand **100** and the three-dimensional position of an object from a plurality of images captured by the image capturing means **200** from a plurality of directions and compare the three-dimensional position of the robotic hand **100** with the three-dimensional position of the object to identify the position of contact between the robotic hand **100** and the object.

Identification of the position of contact between the robotic hand **100** and an object is especially preferable when the robotic hand **100** comprises two finger portions **120** in a positional relationship of a human thumb and index finger and each of the two finger portions **120** comprises a respective vibration sensor **130.** This is also preferable when the robotic hand **100** comprises three finger portions **120** in a positional relationship of a human thumb, index finger, and middle finger and each of the three finger portions **120** comprises a respective vibration sensor 130. For example, when an object is held or manipulated by using two finger portions **120** or three finger portions **120,** the ease of manipulation of an object by the robotic hand **100** and the embodiment can be improved by visual identification of not only a contact between the finger portions **120** and the object, but also the position of contact.

In step **S402,** the processing unit **320** receives a signal sensed by the vibration sensor **130** via the interface unit **310.** A signal sensed by the vibration sensor **130** can be, for example, a voltage signal.

In step **S403,** the processing unit **320** estimates the contact force applied on an object by the robotic hand **100** based on the position of contact identified in step **S401** and the signal received in step **S402.**

For example, the processing unit **320** can estimate the contact force from the relationship between the position of contact between the robotic hand **100** and an object and the intensity of a signal from the vibration sensor **130.** For example, the processing unit **320** can estimate the contact force by using a model developed from modeling the relationship of the intensity of a signal sensed by the vibration sensor **130,** position of contact, and contact force. For example, the processing unit **320** can obtain an estimated value of contact force as an output from a model by inputting the position of contact identified in step **S401** and the intensity of a signal received in step **S402** into the model.

For example, the contact force estimated by the processing **400** can be utilized for controlling the robotic hand **100.** For example, the robotic hand **100** can be controlled to hold an object with an appropriate force based on the contact force estimated by contact force estimation means. This is especially effective when the robotic hand **100** comprises at least three finger portions and three of the at least three finger portions are coupled to the base portion in a positional relationship of a thumb, index finger, and middle finger. Even an object that is challenging to hold can be held with an appropriate force from at least three points by controlling the force exerted on each of the three finger portions **120** in a positional relationship of a thumb, index finger, and middle finger based on the contact force estimated by contact force estimation means.

The above example describes that processing is performed in a specific order, but the order of each processing is not limited to the described order. Processing can be performed in any theoretically possible order. For example, step **S402** can be performed prior to step **S401.**

In the example described while referring to Figure **3****,** the processing of each step shown in Figure **3** was described to be materialized by the processing unit **320** and a program stored in the memory unit **330,** but the present invention is not limited thereto. At least one of the processing of each step shown in Figure **3** can be materialized by a hardware configuration such as a control circuit.

As disclosed above, the present invention is exemplified by the use of its preferred embodiments. However, the present invention should not be interpreted to be limited to such embodiments. It is understood that the scope of the present invention should be interpreted based solely on the claims. It is understood that an equivalent scope can be practiced by those skilled in the art based on the descriptions of the present invention and common general knowledge from the specific descriptions in the preferred embodiments of the invention. It is also understood that any patent, any patent application, and any other references cited herein should be incorporated herein by reference in the same manner as the contents are specifically described herein.

### [Industrial Applicability]

The present invention is useful as an invention providing a robotic hand, which is capable of sensing that a finger portion of the robotic hand has contacted an object and is capable of reducing contact between a vibration sensor and the object.

### [Reference Signs List]

- **100, 100'**: robotic hand
- **110**: base portion
- **120**: finger portion
- **121**: proximal phalanx
- **122**: distal phalanx
- **123**: middle phalanx
- **124, 125, 126, 127**: joint
- **130**: vibration sensor
- **200**: image capturing means
- **300**: controller
- **1000**: robotic system

## Claims

1. A robotic hand comprising:
a base portion;
at least one finger portion coupled to the base portion, comprising at least a proximal phalanx coupled to the base portion and a distal phalanx at a tip; and
a vibration sensor capable of detecting a vibration conducted from the at least one finger portion;
wherein the robotic hand has a back hand side and a palm side, and
wherein the vibration sensor is disposed on the back hand side.

2. The robotic hand of claim 1, wherein the vibration sensor is disposed along a line connecting the proximal phalanx and the distal phalanx.

3. The robotic hand of claim 2, wherein the vibration sensor is disposed at the proximal phalanx.

4. The robotic hand of claim 2, wherein the vibration sensor is disposed at the base portion.

5. The robotic hand of claim 4, wherein the vibration sensor is disposed to extend from a joint to which the proximal phalanx is coupled.

6. The robotic hand of any one of claims 1 to 5, wherein the vibration sensor is disposed on an outer surface.

7. The robotic hand of any one of claims 1 to 6, wherein the vibration sensor has a length that is approximately equal to a length of the proximal phalanx.

8. The robotic hand of any one of claims 1 to 7, wherein the vibration sensor has a rod-like shape.

9. The robotic hand of any one of claims 1 to 8, wherein the vibration sensor comprises a core conductor, a piezoelectric film covering the surrounding of the core conductor, and an outer conductor covering the surrounding of the piezoelectric film.

10. The robotic hand of any one of claims 1 to 9, wherein the vibration sensor is a macromolecular piezoelectric vibration sensor.

11. The robotic hand of any one of claims 1 to 10, wherein the at least one finger portion comprises a thumb portion and one or more finger portions extending in a direction that is different from the thumb portion.

12. A robotic system comprising:
the robotic hand of any one of claims 1 to 10; and
contact position detection means for visually detecting a position of contact between the robotic hand and the object.

13. The robotic system of claim 12, further comprising contact force estimation means for estimating a contact force applied on an object based on the position of contact detected by the contact position detection means and a signal sensed by the vibration sensor.

14. The robotic system of claim 12 or 13, wherein the at least one finger portion comprises a thumb portion and one or more finger portions extending in a direction that is different from the thumb portion.
